# EUROPÄISCHE PATENTSCHRIFT

(11) **EP 1 262 643 B1**
(45) Veröffentlichungstag und Bekanntmachung des Hinweises auf die Patenterteilung: **21.07.2004**
(21) Anmeldenummer: 02009825.7
(22) Anmeldetag: 02.05.2002
(51) Int. Cl.: F01N 3/28, B01D 53/86

(54) **Fahrzeugabgasanlage mit Katalysatoren in einem Abgasleitungsabschnitt**
Vehicle exhaust system with catalysts in an exhaust pipe section
Système d'échappement de véhicule avec des convertisseurs catalytique dans un section de conduit d'échappement

(30) Priorität: 14.05.2001 DE 10123361
(43) Veröffentlichungstag der Anmeldung: 04.12.2002
(73) Patentinhaber: MAN Nutzfahrzeuge Aktiengesellschaft, 80976 München (DE)
(72) Erfinder: Eckert, Reinhard, Dipl.-Ing. (FH), 82178 Puchheim (DE); Raschke, Michael, Dipl.-Ing., 28777 Bremen (DE)

(56) Entgegenhaltungen:
- DE-A- 3 823 550
- FR-A- 2 719 628
- GB-A- 2 047 562
- US-A- 3 771 969
- US-A- 3 796 546
- US-A- 4 709 549
- US-A- 5 330 728
- US-A- 5 593 645

## Beschreibung

Die Erfindung betrifft eine Fahrzeugabgasanlage nach dem Oberbegriff des Anspruches 1.

Eine Vorrichtung dieser Art für einen Pkw ist aus der DE 38 23 550 A1 bekannt. Bei dieser Vorrichtung ist der Katalysatorkörper schräg zur Strömungsrichtung des Abgases gestellt, so dass sich eine relativ große Eintritts- und Austrittsfläche am Katalysatorkörper ergibt. Der Katalysatorkörper baut sehr flach, damit er unter dem Fahrzeugboden angeordnet werden kann.

Bei Nutzfahrzeugen ergeben sich andere Einbauverhältnisse, je nach Nutzfahrzeug. Weiterhin haben die Nutzfahrzeug-Dieselmotoren relativ große Hubvolumina pro Zylinder, so dass die Anwendung der genannten Vorrichtung in z. B. einem Lkw bereits aus diesem Grunde nicht geeignet wäre, weil sich sehr große flache Katalysatorflächen ergeben würden, die unter anderem auch akustisch ungeeignet sind.

Weiterhin müssen Nutzfahrzeuge für sehr hohe Laufzeiten ausgelegt und sehr sicher im Einsatz sein. Es sollte z. B. nicht vorkommen, dass bei einem Lkw Langzeitschäden an der Ladegruppe oder am Motor entstehen, weil der Katalysator einen zu hohen Gegendruck aufweist. Eine sofortige Folge eines zu hohen Gegendruckes ist ein erhöhter Treibstoffverbrauch.

Eine Anordnung, wie sie in einem Pkw etwa Standardausführung ist und aus z. B. der EP 0 925 984 A1 bekannt ist, ist für Nutzfahrzeuge nicht anwendbar, da die Baugruppe eines solchen Katalysators in Nutzfahrzeugen keinen Platz findet.

Ferner beschreibt die US 5 593 645 eine Abgasanlage in der die Katalysatorelement V-förmig angeordnet sind, so dass sich der Querschnitt der Abgaseinströmkammer in Strömungsrichtung der Abgase verkleinert. Durch die Verkleinerung des Querschnittes wird sichergestellt, das die Strömungsgeschwindigkeit der Abgase und damit auch die Verweilzeit der Abgase innerhalb des Katalysators trotz einer Verzweigung der einzelnen Kanäle der Katalysatorelemente, die in Strömungsrichtung eine Abnahme der Abgasmenge innerhalb der Einströmkammer bewirkt, annähernd konstant gehalten wird. Der in dieser Druckschrift beschriebene Katalysator ist somit strömungsoptimiert ausgelegt.

Auch in der US 4 709 549 wird eine Abgasanlage mit einem Katalysator beschrieben, dessen Abgaseinströmkammer einen sich in Strömungsrichtung verjüngenden Querschnitt aufweist. Im Gegensatz zum vorbeschriebenen Katalysator sind allerdings nicht die einzelnen Katalysatorelemente geneigt angeordnet, sondern das Gehäuse weist eine Schräge Außenwand auf, die einseitig die Abgaseinströmkammer begrenzt. Auch dieser Katalysator ist im Wesentlichen strömungsoptimiert ausgelegt. Eine effektive und gleichmäßige Erwärmung des Katalysatormaterials in den verschiedenen Katalysatorelementen kann auf diese Weise allerdings nicht gewährleistet werden.

Aus den genannten Gründen ist es die Aufgabe der Erfindung, einen für Nutzfahrzeuge geeigneten Katalysator darzustellen, bei dem insbesondere eine gleichmäßiger Erwärmung des Katalysatormaterials sichergestellt wird.

Die Aufgabe wird erfindungsgemäß durch die Merkmale des Anspruches 1 gelöst.

Dadurch, dass mindestens zwei Katalysatorelemente, die in einer Schottwand gelagert sind, in einem Gehäuse so angeordnet sind und das Gehäuse entsprechend ausgebildet ist, dass die Ein- und Austrittsflächen der Katalysatorelemente vom Gehäuse beabstandet sind, mit dem Gehäuse eine Art Verteilereinströmkammer und Ausströmsammelkammer bilden und in einem von Null verschiedenen Winkel, der zwischen der Längsmittellinie des Gehäuses und der Längsmittelinie je eines Katalysatorelementes gebildet ist, angestellt sind, und dass Mantelflächen der Katalysatorelemente zumindest teilweise in die Verteilereinströmkammer hineinragen. Aufgrund der vorbeschriebenen Ausführung eines Katalysators ist ein betriebssicherer und in den Abmessungen bezüglich der Summe der Querschnittsflächen der Katalysatorelemente großer Katalysator für ein Nutzfahrzeug darstellbar.

Ein großes Problem bei der Abgasnachbehandlung eines Dieselmotors in einem Nutzfahrzeug, z. B. einem Lkw, ist der Platzbedarf hierfür.

Die Dieselmotoren haben im Verhältnis zum Pkw ein großes Hubvolumen und ein großes Drehmoment, wodurch im Nutzdrehzahlbereich ein relativ hoher und stark puslierender Abgasstrom anfällt.

Es ist deshalb besonders hilfreich, wenn ein Katalysatorgehäuse dem möglichen Einbauraum im Fahrzeug wenigstens annähernd anpassbar" ist und dabei eine möglichst große aktive Katalysatorfläche angeboten werden kann.

Erfindungsgemäß wird dies durch mindestens zwei Katalysatorelemente, es können aber auch drei oder vier sein, die in einem entsprechend ausgebildeten Gehäuse in einer bestimmten Anordnung vorgesehen sind, erreicht.

Im folgenden Text wird die Ausführung mit drei Katalysatorelementen, wie in der Zeichnung dargestellt, beschrieben.

Der dargestellte Katalysator in einem Abgasleitungsabschnitt (Katalysatorkörper) ist einem bestimmten Motorbautyp, der einen bestimmten Leistungs- und Drehmomentenbereich abdeckt, zugeordnet. Der maximal zulässige Abgasgegendruck darf in keinem Betriebsfall im Neuzustand des Katalysatorkörpers überschritten werden.

Durch die Gestaltung des Gehäuses und die Größe und Anstellung der Katalysatorelemente ist die Durchströmung der Katalysatorelemente und der Abgasgegendruck beeinflussbar. Auch spielt die Richtung, aus der das Abgas kommt, für die Anstellung der Katalysatorelemente eine wesentliche Rolle.

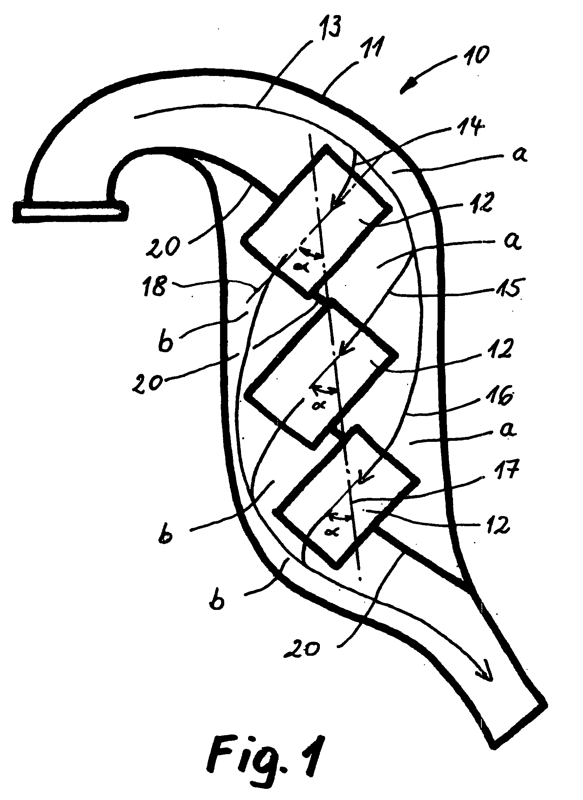

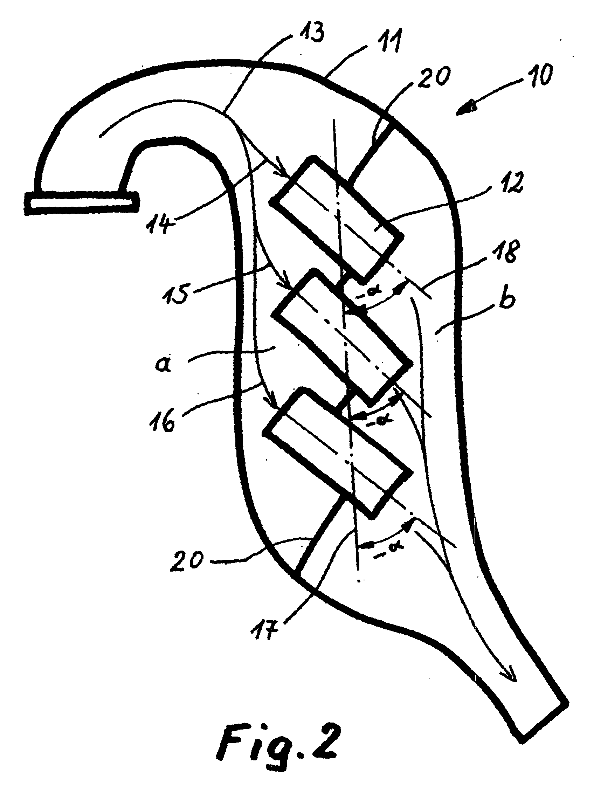

Die Stirnseiten der Katalysatorelemente müssen vom Gehäuse bzw. der Gehäusewandung beabstandet sein, so dass sich ein Raum bildet, den man als Verteilerraum (a) bezeichnen kann. Dabei ist auch eine gewollte Verwirbelung des Abgases zu berücksichtigen, die, je nach dem wie verwirbelt das Abgas in den Katalysatorkörper eintritt, zu zwei grundsätzlichen Ausführungen (Fig. 1 und Fig. 2) führt.

Vorzugsweise ist eine Schottwand im Gehäuse vorzusehen, in der auch die Katalysatorelemente gelagert sind.

Für die Ausströmung der behandelten Abgase aus den Katalysatorelementen ist mit diesen und dem Gehäuse eine Ausströmsammelkammer (b) gebildet. Die Durchströmung der einzelnen Katalysatorelemente hängt dadurch unmittelbar von der Ausbildung dieser beiden Kammern ab. Eine genau gleiche Durchströmung aller Katalysatorelemente wird man wohl nicht erreichen können , aber die genannte Durchströmung muss so gleichmäßig sein, dass sie sich von einer zwangsgeführten Durchströmung kaum unterscheidet.

Dafür hat man bei der erfindungsgemäßen nicht zwangsgeführten Anordnung den Vorteil, dass, wenn ein Katalysatorelement z. B. durch Schwingungen zerstört wird und nicht mehr oder nur teilweise durchströmbar ist oder teilweise oder ganz zugesetzt ist, eine Weiterfahrt des Fahrzeuges in eingeschränkter Weise noch möglich ist. Dem Fahrzeugführer wird dann automatisch in einer Anzeige gemeldet, dass ein Defekt in der Abgasanlage vorliegt und die Weiterfahrt, eben entsprechend eingeschränkt, möglich ist.

Die Anordnung der Katalysatorelemente kann natürlich auch so sein, dass zwei oben liegende Katalysatorelemente und ein dazwischen unterhalb liegendes Katalysatorelement gebildet sind, abhängig vom möglichen Einbauraum im Fahrzeug.

Die Anstellwinkel der einzelnen Katalysatorelemente sind zwar vorzugsweise alle gleich, sie müssen es aber nicht sein, wenn die Strömungs- und Bauraumverhältnisse eine unterschiedliche Anstellung der oder eines der Katalysatorelemente dies erfordert.

Ein weiterer Vorteil des erfindungsgemäßen Katalysatorkörpers ist, dass man z. B. mindestens eines der Katalysatorelemente mit einer anderen Beschichtung ausführt, so dass es als Hydrolysekatalysatorelement wirkt. Dazu muss ein Reduktionsmittel mittels einer Sprühdüse auf der Einströmseite, z. B. etwas beabstandet von der Stirnseite des Hydrolysekatalysatorelementes, eingedüst werden. Damit erspart man sich weiteren Bauraum für einen Hydrolysekatalysator.

Wie bereits erwähnt, ist der Abgasgegendruck ein wichtiges Kriterium für die Dauerbetriebssicherheit eines Nutzfahrzeuges.

In vorteilhafter Ausgestaltung des Katalysatorkörpers ist deshalb mindestens ein Bypass in der Schottwand gebildet. Mit einem Druckbegrenzungsventil kann zumindest Schaden im Katalysatorkörper, aber auch z. B. an der Ladegruppe oder am Motor vermieden werden. Außerdem kann eine Rückströmung des Reduktionsmittels oder des Hydrolyseproduktes stromaufwärts in Richtung Turbine vermieden werden.

Weiterhin kann ein gesteuertes oder geregeltes Ventil vorgesehen sein, das abhängig vom Abgasgegendruck und den entsprechenden Signalen aus dem Bordrechner, bereits bei einem gerade noch zulässigen Gegendruck im System, der z. B. bei einer etwas erhöhten Partikelablagerung auftreten kann, entsprechend öffnen. Bei entsprechenden Betriebszuständen, wenn z. B. eine entsprechend hohe Abgastemperatur erreicht wird, können die Partikel abbrennen und es kann sich dann wieder der durchschnittlich zulässige Gegendruck einstellen.

Eine weitere Möglichkeit der Gestaltung des Katalysatorkörpers ist, durch besondere Formgebung des Gehäuses und/oder der Anordnung der Katalysatorelemente, dass die Schottwand entfallen kann.

Hier bieten sich z. B. eingedrückte Mulden im Gehäuse an den Stellen an, an denen die Katalysatorelemente sein sollen. Vor dem Zusammenbau des Katalysatorkörpers brauchen dann die Katalysatorelemente nur eingelegt oder in einer Halbschale befestigt werden und dann beide Gehäusehälften miteinander verbunden werden. Dabei sollten die Katalysatorelemente eng aneinander gerückt sein. Die Katalysatorelemente könnten auch eine langrunde Form haben, so dass sich eine verbesserte Trennung von Verteilereinström- und Abgassammelkammer bildet. Der Vorteil der einfachen Gestaltung eines Bypasses ist bei der genannten Ausführung allerdings nicht so einfach darstellbar.

In der Zeichnung sind zwei Ausführungsbeispiele der Erfindung schematisch dargestellt.

Es zeigen:
- Fig. 1: einen Querschnitt des Katalysatorkörpers,
- Fig. 2: einen Querschnitt des Katalysatorkörpers,
- Fig. 3: einen Querschnitt wie Fig. 1 mit Bypass,
- Fig. 4: einen Querschnitt wie in Fig. 1 mit Bypass,
- Fig. 5: einen Querschnitt des Katalysatorkörpers ohne Schottwand.

Die Fig. 1 zeigt einen Querschnitt des Katalysatorkörpers 10. Im Katalysatorkörper 10 sind drei Katalysatorelemente 12 angeordnet, die einen Winkel α zwischen der Mittellinie 17 des Gehäuses 11 und der Mittellinie 18 eines Katalysatorelementes 12 bilden. Die Winkel α an den einzelnen Katalysatorelementen 12 können, aber müssen nicht, gleich sein. Wichtig ist, dass die Durchströmung der einzelnen Katalysatorelemente, dargestellt durch die Stromfäden 14, 15, 16, annähernd gleich ist.

Durch die Schottwand 20, in der die Katalysatorelemente 12 gelagert sind, ist exakt eine Verteilereinströmkammer a und eine Ausströmsammelkammer b gebildet. Von der Einströmrichtung 13 des Abgasstromes ist der Winkel α, auch Anstellwinkel genannt, unter weiteren Bedingungen abhängig.

Die Strömungsverhältnisse in der Verteilereinströmkammer a und die der Ausströmsammelkammer b müssen so aufeinander abgestimmt sein, dass jedes Katalysatorelement 12 annähernd gleich durchflutet ist.

Die Fig. 2 zeigt den gleichen Katalysatorkörper 10 wie in Fig. 1, nur sind die Katalysatorelemente12 in einem Winkel -α zwischen der Mittellinie 17 des Gehäuses 11 und der Mittellinie 18 angeordnet. Diese Anordnung weist einen geringeren Strömungswiderstand auf, es muss jedoch noch eine gewollte Verwirbelung des Abgases berücksichtigt werden, was z. B. mit einer stromaufwärts liegenden Abgasleitungsführung beeinflussbar ist.

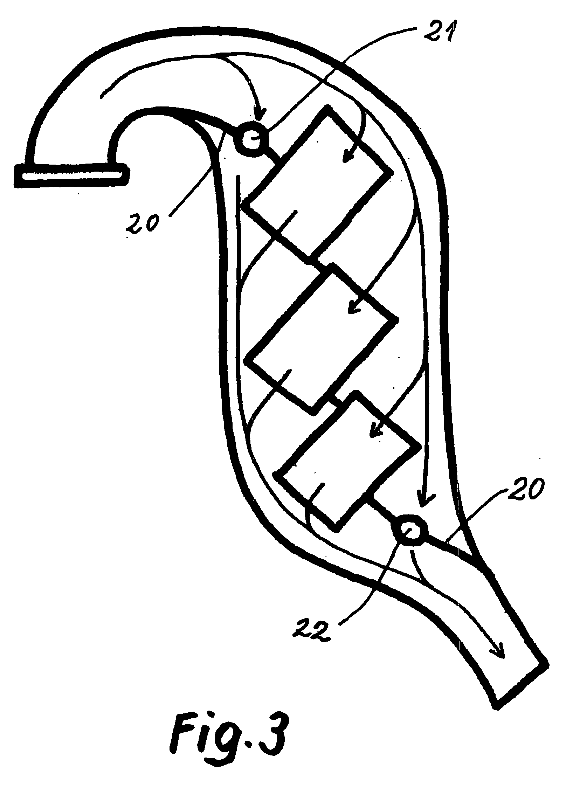

Die Fig. 3 zeigt in der Schnittdarstellung eine mögliche Anordnung von Bypässen 21, 22, wobei auch nur ein Bypass 21, 22 ausgeführt sein kann. Das Rohrstück für den Bypass kann auch um 90° geschwenkt sein. In dieser Anordnung ist vorteilhafterweise ein Druckbegrenzungsventil eingebracht.

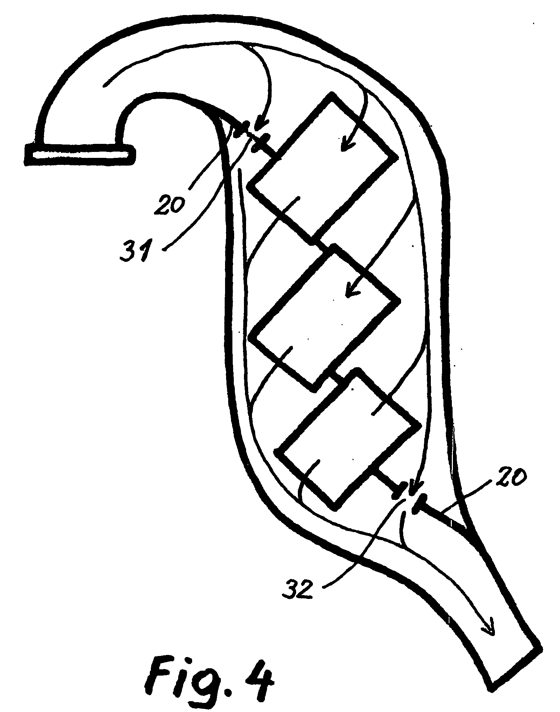

Die Fig. 4 ist ähnlich wie Fig. 3, nur dass nach Fig. 4 vorzugsweise eine Steuerung (nicht gezeichnet) oder einer Regelung (nicht gezeichnet) des Bypasses vorzusehen ist.

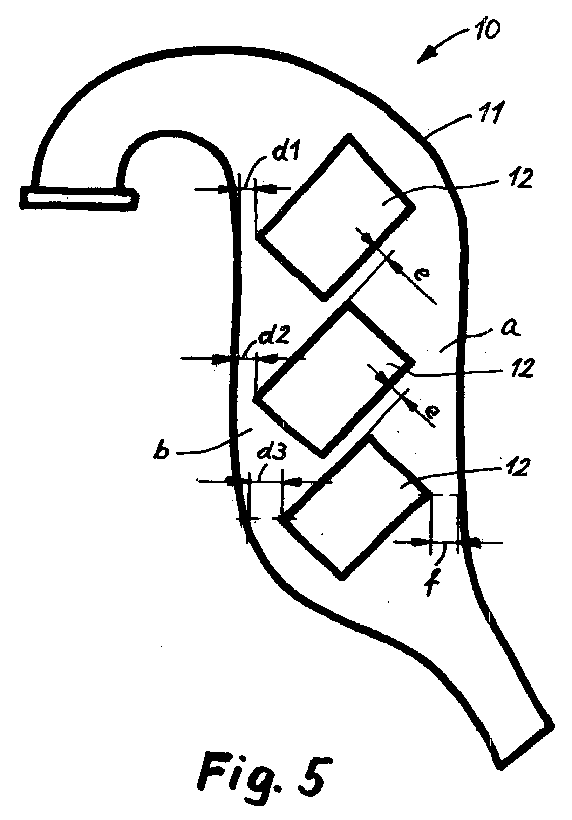

Die Fig. 5 zeigt einen Querschnitt eines Katalysatorkörpers 10 ohne Schottwand. Damit der Effekt der Trennung der Verteilereinströmkammer a von der Ausströmsammelkammer b erreicht wird, müssen die Abstände d1, d2, d3 unterschiedlich sein, z. B. d1 klein oder nach Null gehend, d3 am größten und d2 dazwischenliegend. Der Abstand f muss ebenfalls sehr klein oder Null sein. Das Gehäuse 11, das aus zwei Gehäusehälften besteht, hat vorzugsweise Mulden, in denen die Katalysatorelemente 12 vor dem Verbinden des Gehäuses 11 eingelegt oder mit einer Gehäusehälfte verbunden werden und so nach dem genannten Verbinden des Gehäuses 11 festgehalten sind.

## Patentansprüche

1. Fahrzeugabgasanlage mit Katalysatoren in einem Abgasleitungsquerschnitt (10) zur Reinigung der Abgase eines Dieselmotors in einem Nutzfahrzeug, **dadurch gekennzeichnet, dass** mindestens zwei Katalysatorelemente (12), die in einer Schottwand (20) gelagert sind, in einem Gehäuse (11) so angeordnet sind und das Gehäuse (11) entsprechend ausgebildet ist, dass die Ein- und Austrittsflächen der Katalysatorelemente (12) vom Gehäuse beabstandet sind, mit dem Gehäuse (11) eine Art Verteilereinströmkammer (a) und Ausströmsammelkammer (b) bilden und in einem von Null verschiedenen Winkel (α, -α), der zwischen der Längsmittellinie (17) des Gehäuses (11) und der Längsmittelinie (18) je eines Katalysatorelementes (12) gebildet ist, angestellt sind, und dass Mantelflächen der Katalysatorelemente (12) zumindest teilweise in die Verteilereinströmkammer (a) hineinragen.

2. Fahrzeugabgasanlage nach Anspruch 1, **dadurch gekennzeichnet, dass** der Winkel (α,-α) zwischen 10° und 90° ist.

3. Fahrzeugabgasanlage nach Anspruch 2, **dadurch gekennzeichnet, dass** der Winkel (α,-α) der einzelnen Katalysatorelemente unter sich gesehen, nicht gleich sein muss.

4. Fahrzeugabgasanlage nach Anspruch 1, **dadurch gekennzeichnet, dass** mindestens eines der Katalysatorelemente (12) ein mit einem Reduktionsmittel beaufschlagtes Hydrolysekatalysatorelement sein kann.

5. Fahrzeugabgasanlage nach Anspruch 1, **dadurch gekennzeichnet, dass** in der Schottwand (20) mindestens ein Bypass (21, 22, 31, 32) gebildet ist.

6. Fahrzeugabgasanlage nach Anspruch 5, **dadurch gekennzeichnet, dass** der mindestens eine Bypass mit einem Druckbegrenzungsventil versehen ist.

7. Fahrzeugabgasanlage nach Anspruch 5, **dadurch gekennzeichnet, dass** der mindestens eine Bypass (21, 22, 31, 32) ein gesteuertes oder geregeltes Ventil aufweist, dessen Steuer- oder Regelwerte vom momentanen Abgasgegendruck abhängig sind.

8. Fahrzeugabgasanlage nach Anspruch 1, **dadurch gekennzeichnet, dass** das Gehäuse (11) und die mindestens zwei Katalysatorelemente (12) durch Formgestaltungen, beispielsweise Eindrückungen im Gehäuse (11) zwischen zwei Katalysatorelementen (12), oder/und ein geringer Abstand (d) zwischen Gehäuse (11) und Katalysatorelementen (12) und/oder langrund geformte Katalysatorelemente (12) oder/und die Katalysatorelemente (12) einen geringen Abstand (e), der auch Null sein kann, haben, so ausgebildet sind, dass sich auch ohne Schottwand (20) der nötige Überdruck zwischen der Verteilereinströmkammer (a) und der Ausströmsammelkammer (b) für die Durchströmung der Katalysatorelemente (12) bildet.

## Claims

1. Vehicle exhaust system with catalytic converters in an exhaust-gas pipe cross-section (10) for cleaning the exhaust gases of a diesel engine in a commercial vehicle, **characterised in that** at least two catalytic-converter elements (12) supported in a bulkhead wall (20), arranged in a correspondingly designed housing (11) so that the inlet and outlet faces of the catalytic-converter elements (12) are located at a distance relative to the housing, form a type of distributor inlet chamber (a) and outlet collector chamber (b) together with the housing (11) and are arranged at an angle (α, -α) which has a value other than zero and is formed between the longitudinal centre line (17) of the housing (11) and the longitudinal centre line (18) of each of the catalytic-converter elements (12) and that jacket faces of the catalytic-converter elements (12) at least partially protrude into the distributor inlet chamber (a).

2. Vehicle exhaust system according to Claim 1, **characterised in that** the angle (α, -α) lies between 10° and 90°.

3. Vehicle exhaust system according to Claim 2, **characterised in that** the angle (α, -α) of the individual catalytic-converter elements need not be the same for each of the catalytic-converter elements.

4. Vehicle exhaust system according to Claim 1, **characterised in that** at least one of the catalytic-converter elements (12) may be a hydrolytic catalytic-converter element supplied with a reducing agent.

5. Vehicle exhaust system according to Claim 1, **characterised in that** at least one bypass (21, 22, 31, 32) is provided in the bulkhead wall (20).

6. Vehicle exhaust system according to Claim 5, **characterised in that** the at least one bypass is provided with a pressure limiting valve.

7. Vehicle exhaust system according to Claim 5, **characterised in that** the at least one bypass (21, 22, 31, 32) has a controlled or regulated valve whose control or regulating values are a function of the momentary exhaust-gas back pressure.

8. Vehicle exhaust system according to Claim 1, **characterised in that** the housing (11) and the at least two catalytic-converter elements (12) are designed through forming - eg impressions in the housing (11) between two catalytic-converter elements (12), or/and a small distance (d) between the housing (11) and the catalytic-converter elements (12) and/or catalytic-converter elements (12) of rounded oblong design or/and the catalytic-converter elements (12) have a small distance (e) which may also be zero - so that even without a bulkhead wall (20) the necessary overpressure between the distributor inlet chamber (a) and the outlet collector chamber (b) is generated for passage through the catalytic-converter elements (12).

## Revendications

1. Circuit d'échappement d'un véhicule avec pots catalytiques dans une section de tube d'échappement (10) pour filtrer les gaz d'échappement d'un moteur diesel dans un véhicule industriel, **caractérisé par le fait qu'**au minimum deux éléments catalyseurs (12), qui sont logés dans une cloison (20) et disposés dans un carter (11) et avec un carter formé en conséquence de telle manière que les surfaces d'admission et d'échappement des éléments catalyseurs (12) du carter soient disposés à une certaine distance les unes par rapport aux autres, forment avec un carter (11) une sorte de chambre d'admission distributrice (a) et une chambre collectrice d'échappement (b) et sont disposés à un angle différent de zéro (α, -α) représenté entre la ligne médiane longitudinale (17) du carter et la ligne médiane longitudinale (18) de chacun des éléments catalyseurs (12) et **par le fait que** les surfaces enveloppantes des éléments catalyseurs (12) dépassent au minimum en partie dans la chambre d'admission distributrice (a)

2. Circuit d'échappement d'un véhicule selon la revendication 1, **caractérisé par le fait que** l'angle (α, -α) est compris entre 10° et 90°.

3. Circuit d'échappement d'un véhicule selon la revendication 2, **caractérisé par le fait que** l'angle (α, -α) de chaque élément catalyseur (12), vu les uns par rapport aux autres, ne doit pas être identique.

4. Circuit d'échappement d'un véhicule selon la revendication 1, **caractérisé par le fait qu'**au minimum un des éléments catalyseurs (12) peut être un élément catalyseur à hydrolyse alimenté en agent de réduction.

5. Circuit d'échappement d'un véhicule selon la revendication 1, **caractérisé par le fait qu'**au minimum un passage de dérivation (21, 22, 31, 32) est réalisé dans la cloison (20)

6. Circuit d'échappement d'un véhicule selon la revendication 5, **caractérisé par le fait qu'**au minimum un passage de dérivation (21, 22, 31, 32) est équipé d'une valve de limitation de pression.

7. Circuit d'échappement d'un véhicule selon la revendication 5, **caractérisé par le fait qu'**au minimum un passage de dérivation (21, 22, 31, 32) présente une valve commandée ou régulée dont les valeurs de commande ou de régulation dépendent de la contre-pression des gaz d'échappement momentanée.

8. Circuit d'échappement d'un véhicule selon la revendication 1, **caractérisé par le fait que** le carter (11) et, au minimum, les deux éléments catalyseurs (12) sont conçues de différentes formes, par exemple des enfoncements dans le carter (11) entre deux éléments catalyseurs (12) ou/et un faible espacement (d) entre le carter (11) et les éléments catalyseurs (12) et/ou des éléments catalyseurs (12) de forme longue et arrondie et/ou les éléments catalyseurs (12) sont disposés les uns près des autres à un espacement (e) qui peut être égal à zéro, de telle manière que la surpression nécessaire entre la chambre d'admission distributrice (a) et la chambre collectrice d'échappement (b) pour l'écoulement des gaz à travers les éléments catalyseurs (12) se forme même sans cloison (20).
